**Europäisches Patentamt**

**European Patent Office**

**Office européen des brevets**

(19)

(11) Veröffentlichungsnummer : **0 015 423
B1**

(12) **EUROPÄISCHE PATENTSCHRIFT**

(45) Veröffentlichungstag der Patentschrift :
28.04.82

(51) Int. Cl.³ : **B 28 D   5/04**

(21) Anmeldenummer : **80100760.0**

(22) Anmeldetag : **14.02.80**

(54) Anordnung zum Zerteilen von hartsprödem Material, insbesondere Halbleitermaterial.

(30) Priorität : **26.02.79 DE 2907380**

(43) Veröffentlichungstag der Anmeldung : 
**17.09.80 (Patentblatt 80/19)**

(45) Bekanntmachung des Hinweises auf die Patenterteilung : **28.04.82 Patentblatt 82/17**

(84) Benannte Vertragsstaaten :
**CH FR**

(56) Entgegenhaltungen :
**BE - A - 655 570
FR - A - 1 276 496
FR - E - 13 950
US - A - 1 674 519**

(73) Patentinhaber : **SIEMENS AKTIENGESELLSCHAFT
Berlin und München
Postfach 22 02 61
D-8000 München 22 (DE)**

(72) Erfinder : **Hini, Paul
Barschenweg 10
D-8520 Kosbach (DE)**

Imprimerie Jouve, 18, rue St-Denis, 75001 Paris, France

Anordnung zum Zerteilen von hartsprödem Material, insbesondere Halbleitermaterial

Die Erfindung bezieht sich auf eine Anordnung zum Zerteilen von hartsprödem Material, insbesondere Halbleitermaterial, mit einem ersten Antrieb für eine Hin- und Herbewegung des Materials über eine Vielzahl von Sägeblättern, die in einem beweglichen Spannrahmen nebeneinander angeordnet sind. Der Spannrahmen ist mittels quer zur Schwingungsrichtung angeordneter Blattfedern gelagert und mit einem zweiten Antrieb versehen, der den Spannrahmen in Richtung der Sägeblätter mit einer zweiten Frequenz schwingen läßt, die hoch ist im Vergleich zur ersten Frequenz und mit einer Amplitude, die klein ist im Verhältnis zum Hub des ersten Antriebes. Für den zweiten Antrieb wird ein elektromagnetisch oder magnetostriktiv arbeitender Antrieb verwendet. Eine derartige Anordnung ist bekannt aus der DE-A-25 37 088.

Die Relativbewegung zwischen den Sägeblättern und dem zu zerteilenden Material erhält man in der bekannten Anordnung dadurch, daß das zu zerteilende Material die langsame Hin- und Herbewegung ausführt. Es ist zu diesem Zweck an dem Schwenkarm eines Kurbelantriebes befestigt und wird mit diesem in der Schnittrichtung mit einer Frequenz bewegt, die so gewählt wird, daß eine Hin- und Herbewegung wenige Sekunden nicht wesentlich überschreitet. Dagegen wird die Frequenz der Schwingbewegung der Sägeblätter im allgemeinen einige Kilohertz betragen. Bei dieser Überlagerung der langsamen Bewegung des zu zerteilenden Materials mit der zusätzlichen schnellen Schwingbewegung der Sägeblätter wirkt sich die Schwingbewegung wesentlich auf das Abtragen des Materials aus, während durch die langsame Hin- und Herbewegung das abgetragene Material aus den Schneidspalten herausgeführt wird.

Durch die Aufhängung des Spannrahmens mit den quer zur Schwingungsrichtung angeordneten Blattfedern erhält man eine entsprechende Stabilisierung der Sägeblätter, die ein Ausweichen der Schneidkanten der Sägeblätter weitgehend verhindert.

Der Erfindung liegt nun die Aufgabe zugrunde, diese bekannte Anordnung zum Zerteilen von hartsprödem Material weiter zu verbessern ; insbesondere soll das Zerteilen des Materials mit sehr schmalen Schnittspalten möglich sein, außerdem soll ein Ausweichen der Schnittkanten der Sägeblätter während ihrer Schwingbewegung weitgehend verhindert werden. Die Erfindung beruht nun auf der Erkenntnis, daß die Schnittkanten der Sägeblätter in ihrer Längsrichtung dann besonders gut stabilisiert werden, wenn die Krafteinleitung für die Hin- und Herbewegung des Schwingrahmens so gesteuert wird, daß der Rahmen und damit auch die Sägeblätter stets nur auf Zug beansprucht werden.

Die erwähnte Aufgabe wird deshalb erfindungsgemäß dadurch gelöst, daß zwei Antriebe für die Schwingbewegung der Sägeblätter vorgesehen sind, die mit gekoppelter Steuerung jeweils abwechselnd mit der Frequenz der Schwingung eine Zugkraft in entgegengesetzter Richtung auf die Sägeblätter bewirkt. Die Antriebe werden jeweils an den in der Längsrichtung der Sägeblätter einander gegenüberliegenden Teilen des Spannrahmens angebracht und so gesteuert, daß sie nur Zugkräfte auf den Rahmen ausüben, die um 180° phasenverschoben sind.

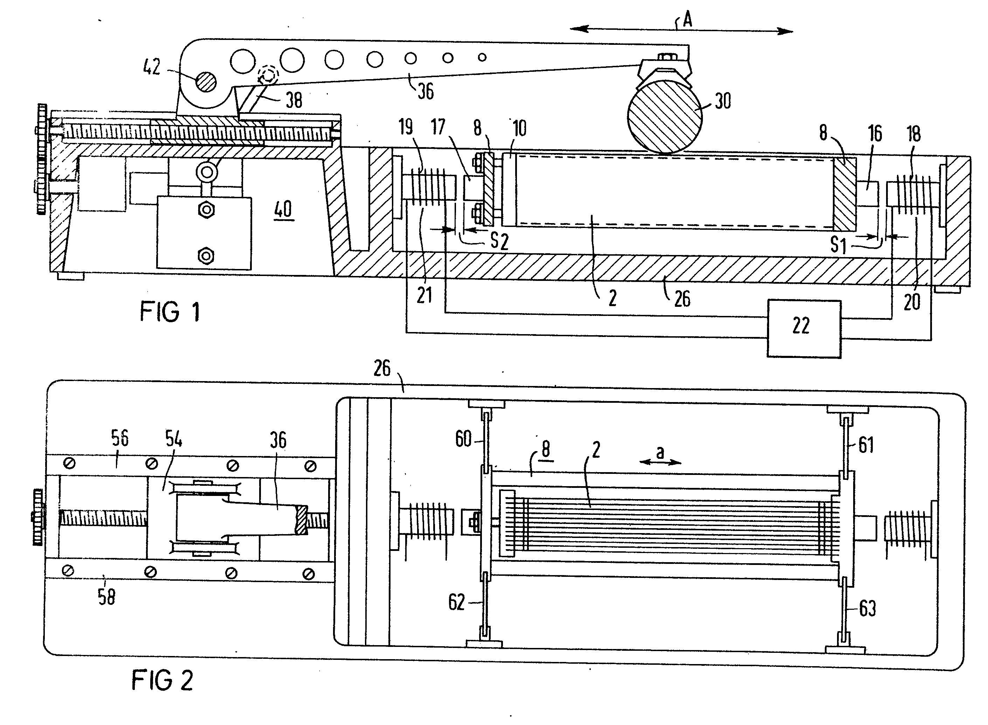

Zur weiteren Erläuterung der Erfindung wird auf die Zeichnung Bezug genommen, in der ein Ausführungsbeispiel einer Anordnung zur Durchführung des Verfahrens nach der Erfindung schematisch veranschaulicht ist. Fig. 1 zeigt die Anordnung im Längsschnitt und in Fig. 2 ist eine Draufsicht dargestellt.

Nach Fig. 1 sind Sägeblätter 2 in einen Spannrahmen 8 eingesetzt, der mit einer Spannvorrichtung 10 für die Sägeblätter 2 versehen ist. Der Spannrahmen 8 ist in Längsrichtung der Sägeblätter 2 jeweils mit einem Eisenkern 16 bzw. 17 versehen, deren Stirnfläche jeweils in einem vorbestimmten Abstand s1 bzw. s2 von einem nicht näher bezeichneten Eisenkern einer Magnetspule 18 bzw. 19 angeordnet ist, die jeweils einen Schwingantrieb 20 bzw. 21 für die Sägeblätter 2 bilden. Die Schwingantriebe 20 und 21 sind jeweils am Rahmen 26 der Anordnung befestigt. Die Spulen 18 und 19 sind an eine gemeinsame Steuereinrichtung 22 angeschlossen, welche die Antriebe 20 und 21 derart steuert, daß sie jeweils abwechselnd mit einer Phasenverschiebung von 180° nur eine Zugkraft auf die Sägeblätter 2 ausüben.

Oberhalb der Sägeblätter 2 ist ein stabförmiger kristalliner Halbleiterkörper 30 angeordnet, der an einem Schwenkarm 36 befestigt ist. Der Schwenkarm 36 ist mit einem Schwenkhebel 38 versehen und gehört zu einem Antrieb 40, der zur Hin- und Herbewegung des Halbleiterkörpers 30 in Längsrichtung der Sägeblätter 2 mit verhältnismäßig großer Amplitude und geringer Frequenz dient, was in der Figur durch einen mit A bezeichneten Doppelpfeil angedeutet ist. Mit dem Schwenkhebel 38 kann der Schwenkarm 36 um eine Drehachse 42 bewegt werden.

Aus Fig. 2 ist die Befestigung des Schwenkarmes 36 in einem Kurbelantrieb 54 zu entnehmen, der zwischen Halterungen 56 und 58 verschiebbar angeordnet ist, die zweckmäßig als Gleichschienen ausgebildet sein können. Der Spannrahmen 8 ist am Grundrahmen 26 so befestigt, daß er in Längsrichtung der Sägeblätter 2 mit geringer Amplitude beweglich ist. Zu diesem Zweck sind Blattfedern 60 bis 63 vorgesehen, deren eines Ende jeweils am Spannrahmen 8 befestigt und deren anderes Ende am Grundrahmen 26 befestigt ist.

Mit dieser Lagerung des Spannrahmens 8 ist nur seine Schwingbewegung in der durch einen Doppelpfeil A angedeuteten Richtung quer zur Längsrichtung der Blattfedern 60 bis 63 und quer zu deren Flachseiten möglich.

Im Ausführungsbeispiel sind elektromagnetische Antriebe 20 und 21 für den Spannrahmen 8 und damit die Sägeblätter 2 vorgesehen. In einer bevorzugten Ausführungsform der Anordnung können jedoch auch Ultraschallantriebe für die Sägeblätter 2 verwendet werden, die mit der gekoppelten Steuerung versehen sind und die Sägeblätter 2 mit einer Schwingfrequenz von vorzugsweise etwa 2 bis 30 KHz, insbesondere etwa 5 bis 10 KHz, bewegen.

### Anspruch

Anordnung zum Zerteilen von hartsprödem Material, insbesondere Halbleitermaterial, mit einem ersten Antrieb (40) für eine Hin- und Herbewegung des Materials (30) über eine Vielzahl von Sägeblättern (2), die in einem beweglichen Spannrahmen (8) nebeneinander angeordnet sind, wobei der Spannrahmen (8) mittels quer zur Schwingungsrichtung angeordneter Blattfedern (60-63) gelagert ist und mit einem zweiten Antrieb (18), der den Spannrahmen (8) in Richtung der Sägeblätter mit einer zweiten Frequenz schwingen läßt, die hoch ist im Vergleich zur ersten Frequenz, und mit einer Amplitude, die klein ist im Verhältnis zum Hub des ersten Antriebes (40), und wobei für den zweiten Antrieb (18) ein elektromagnetisch oder magnetostriktiv arbeitender Antrieb verwendet wird, dadurch gekennzeichnet, daß für den zweiten Antrieb (18) zwei gleichartige Antriebseinheiten (18, 19) vorgesehen sind, welche mittels gekoppelter Steuerung (22) jeweils abwechselnd mit der Frequenz der Schwingung Zugkräfte auf den Spannrahmen (8) ausüben, welche um 180° phasenverschoben sind.

### Claim

An arrangement for dividing hard, brittle material, in particular semiconductor material, comprising a first drive means (40) for effecting a reciprocating movement of the material (30) over a plurality of saw blades (2) which are arranged beside one another in a movable clamping frame (8), the clamping frame (8), being supported by means of leaf springs (60-63) which are arranged transversely to the direction of reciprocation, and a second drive means (18) which allows the clamping frame (8) to oscillate in the direction of the saw blades at a second frequency, which is high in comparison to the first frequency, and at an amplitude which is small relative to the stroke of the first drive means (40), and wherein an electromagnetically or magnetostrictively operating drive means is used as the second drive means (18), characterised in that for the second drive means (18), there are provided two similar driving units (18, 19) which, through a coupled control means (22), alternately exert at the oscillation frequency tractive forces on the clamping frame (8), which are 180° out of phase.

### Revendication

Dispositif pour découper un matériau fortement fragile, plus particulièrement un matériau semi-conducteur, du type comportant un premier entraînement (40) pour animer le matériau (30) d'un mouvement alternatif au-dessus de plusieurs lames de scie (2) disposées les unes à côté des autres dans un cadre mobile (8) de mise sous tension, monté au moyen de lames de ressort (60-63) disposées transversalement à la direction d'oscillation, ainsi qu'un second entraînement (18) qui fait osciller le cadre de mise sous tension (8) dans la direction des lames de scie avec une seconde fréquence qui est grande par rapport à la première fréquence et avec une amplitude qui est faible par rapport à la course du premier entraînement (40), un entraînement électromagnétique ou magnétostrictif étant utilisé pour le second entraînement, caractérisé par le fait que pour le second entraînement (18) il est prévu deux unités d'entraînement (18, 19) d'un même genre qui exercent chacun, à l'aide d'une commande couplée (22), alternativement et à la fréquence de l'oscillation, des forces de traction sur le cadre de serrage (8), qui sont déphasées de 180°.

FIG 1

FIG 2

0 015 423